(19) Europäisches Patentamt
European Patent Office
Office européen des brevets

(11) **EP 4 353 772 A1**

(12) **EUROPEAN PATENT APPLICATION**
published in accordance with Art. 153(4) EPC

(43) Date of publication:
**17.04.2024 Bulletin 2024/16**

(21) Application number: **22816131.1**

(22) Date of filing: **31.05.2022**

(51) International Patent Classification (IPC):
**C08J 5/18** (2006.01)    **B29C 55/12** (2006.01)

(52) Cooperative Patent Classification (CPC):
**B29C 55/12; C08J 5/18;** Y02E 60/10

(86) International application number:
**PCT/JP2022/022217**

(87) International publication number:
**WO 2022/255385 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2021   JP 2021091702**

(71) Applicant: **National University Corporation Gunma University**
**Maebashi-shi, Gunma 371-8510 (JP)**

(72) Inventors:
• **UEHARA, Hiroki**
**Maebashi-shi, Gunma 371-8510 (JP)**
• **KAKIAGE, Masaki**
**Maebashi-shi, Gunma 371-8510 (JP)**
• **HARASAWA, Ritsuki**
**Maebashi-shi, Gunma 371-8510 (JP)**

(74) Representative: **Meissner Bolte Partnerschaft mbB**
**Patentanwälte Rechtsanwälte**
**Postfach 86 06 24**
**81633 München (DE)**

(54) **SUB-MICRON THIN FILM MADE OF ULTRA-HIGH MOLECULAR WEIGHT POLYETHYLENE AND METHOD FOR MANUFACTURING SAME**

(57)    An ultra-high molecular weight polyethylene submicron thin film, including, as a main component, an ultra-high molecular weight polyethylene having a viscosity average molecular weight of from 1 million to 15 million, wherein a film thickness is less than 1 $\mu$m, and a tensile breaking strength is 100 MPa or more, and a method of producing the same.

FIG.1

EP 4 353 772 A1

**Description**

TECHNICAL FIELD

The present invention relates to an ultra-high molecular weight polyethylene submicron thin film and a method of producing the same, and specifically relates to an ultra-high molecular weight polyethylene submicron thin film, having a film thickness of less than 1 $\mu$m, a high visible light transmissive property, and high tensile breaking strength and tear strength, and a method of producing the same.

BACKGROUND ART

A polymer thin film is generally recognized as a film thinner than 1 $\mu$m formed on a substrate by solution casting, vapor deposition polymerization, or the like, and it is revealed that a polymer thin film is in a state where molecular mobility is excited as compared with a bulk state (Non-Patent Document 1). Here, attempts have been made to create a self-supporting thin film having a nm thickness, and a method of arranging polymer chains on a water surface by self-assembly and a film formation method of forming a film by casting a polymer solution on a substrate and then separating the film have been proposed (Non-Patent Document 2). However, with these methods, it is difficult to prepare a film of a large area.

Here, the ultra-high molecular weight polyethylene (hereinafter, also referred to as a "UHMW-PE") is a polyethylene having a molecular weight of 1 million or more, and has excellent performances such as high strength, abrasion resistance, and chemical stability due to a high molecular weight thereof. However, since many molecular chain entanglements are contained, a melt viscosity is high, and it is difficult to perform molding processing. In particular, a thinned film thereof is produced by a skiving method of performing shaving from a block sintered in advance, and a film thickness thereof is limited to about 100 $\mu$m. Therefore, the transparency of a UHMW-PE film molded by this method is low.

As a method of molding the UHMW-PE, there are a gel stretching method (Non-Patent Document 3) used for manufacturing a high-strength fiber or a battery separator and a thermally induced phase separation method (Non-Patent Document 4). However, since a large amount of organic solvent is used in these molding methods, there are concerns about an increase in recovery costs and an environmental load due to volatilization and release.

In this regard, a processing method in which molecular chain entanglement of UHMW-PE is used as a transmission point of deformation stress is a "melt stretching method" (Non-Patent Document 5). In a melt stretching process thereof, an "extended chain crystal" in which a molecular chain of polyethylene is extended and crystallized is formed. The extended chain crystal is a constituent of a high-strength polyethylene fiber and exhibits high strength. The number of extended chain crystals increases and the film develops high strength as a stretch ratio is higher. Here, in a cooling process, a structure in which a folded-chain crystal which is easily deformed is epitaxially grown with respect to the extended chain crystal is formed. The feature of this molding method is that a UHMW-PE thin film can be molded without using any organic solvent.

Using this method, a UHMW-PE thin film having a film thickness of 5 $\mu$m is formed by stretching to 8 $\times$ 8 times in an x-axis direction and a y-axis direction (Patent Document 1). Furthermore, by increasing the stretch ratio to 16 $\times$ 16 times, a UHMW-PE thin film having a film thickness of 2 $\mu$m is also formed (Patent Document 2). For this purpose, a biaxial stretching apparatus (Patent Document 3) capable of stretching to a high ratio has been developed.

In addition, it has also been reported that a UHMW-PE thin film is obtained by dropping a UHMW-PE solution onto a glass substrate, and picking and pulling up, with tweezers, the UHMW-PE after it has been melted at a temperature equal to or higher than the melting point of the UHMW-PE (Non-Patent Document 6).

Patent Document 1: Japanese Patent Application Laid-Open JP 2010-201 649 A
Patent Document 2: Japanese Patent Application Laid-Open JP 2019-193 997 A
Patent Document 3: International Publication No. WO 2018/039436 A1

Non-Patent Document 1: K. Tanaka et al., ACS Macro Lett., Vol.7, p. 1198 (2018)
Non-Patent Document 2: S. Takeoka et al, Adv. Mater., Vol. 25, p. 545 (2013)
Non-Patent Document 3: P. Smith et al, J. Mater. Sci., Vol. 15, p. 505 (1980)
Non-Patent Document 4: A. Pankaj et al, Chem. Rev., Vol. 104, p. 4419 (2004)
Non-Patent Document 5: H. Uehara et al., Adv. Funct. Mater., Vol. 22, p. 2048 (2012)
Non-Patent Document 6: Thomas Keller, Matthias Grosch, and Klaus D. Jand. Macromolecules 2007, 40, 5812-5819

## SUMMARY OF THE INVENTION

### Technical Problem

However, since a film breaks when a stretch ratio is further increased, it is thus difficult to reduce a film thickness any further. In addition, although the production method of Non-Patent Document 6 can partially reduce a thickness, it is also difficult to obtain a UHMW-PE thin film having a practical size, including uniform thinning. Therefore, physical property values such as tensile breaking strength, tear strength, a nitrogen permeability coefficient, and light transmittance have not been obtained.

An object of an embodiment of the invention is to provide an ultra-high molecular weight polyethylene submicron thin film, having a film thickness of less than 1 $\mu$m, a high visible light transmissive property, and high tensile breaking strength and tear strength, and a method of producing the same.

### Solution to the Problem

First, the inventors performed a first stage melt biaxial stretching of a UHMW-PE raw film in an x-axis direction and a y-axis direction up to a predetermined stretch ratio, and then further performed a second stage melt biaxial stretching on the stretched film obtained by cooling after the first stage melt biaxial stretching.

In addition, the inventors further performed a second stage melt biaxial stretching on the stretched film that was cooled after being subjected to a melt shrinking treatment after the first stage melt biaxial stretching.

In this way, the inventors aimed to create a UHMW-PE submicron thin film by the multi-stage stretching.

A solution to the problem includes the following embodiments.

<1> An ultra-high molecular weight polyethylene submicron thin film, comprising, as a main component, an ultra-high molecular weight polyethylene having a viscosity average molecular weight of from 1 million to 15 million, wherein a film thickness is less than 1 $\mu$m, and a tensile breaking strength is 100 MPa or more.

<2> The ultra-high molecular weight polyethylene submicron thin film according to <1>, wherein a tear strength is 5 N/mm or more.

<3> The ultra-high molecular weight polyethylene submicron thin film according to <1> or <2>, wherein a nitrogen permeability coefficient is $1 \times 10^{-14}$ mol·m/(m²·s·Pa) or less.

<4> The ultra-high molecular weight polyethylene submicron thin film according to any one of <1> to <3>, wherein a haze value in a visible light region is 50 % or less.

<5> The ultra-high molecular weight polyethylene submicron thin film according to any one of <1> to <4>, wherein a melting profile recorded with a differential scanning calorimeter includes one or more endothermic peaks at each of (1) from 130 °C to lower than 140 °C, (2) from 140 °C to lower than 150 °C, and (3) 150 °C or higher.

<6> The ultra-high molecular weight polyethylene submicron thin film according to any one of claims 1 to 5, wherein an adhesion coefficient obtained by an adhesion test is 1,000 N/m or more.

<7> A method of producing an ultra-high molecular weight polyethylene submicron thin film, the method comprising:

a first melt biaxial stretching step of melt biaxial stretching a raw film containing, as a main component, an ultra-high molecular weight polyethylene having a viscosity average molecular weight of from 1 million to 15 million, in an x-axis direction and a y-axis direction at a temperature equal to or higher than a melting point of the raw film;

a cooling step of cooling the stretched film stretched in the first melt biaxial stretching step to a temperature equal to or lower than a melting point of the stretched film; and

a second melt biaxial stretching step of melt biaxial stretching the stretched film cooled in the cooling step again in the x-axis direction and the y-axis direction at a temperature equal to or higher than the melting point of the stretched film,

wherein a film thickness of the ultra-high molecular weight polyethylene submicron thin film to be obtained is less than 1 $\mu$m.

<8> The method of producing an ultra-high molecular weight polyethylene submicron thin film according to <6>, further comprising, before the cooling step, a melt biaxial shrinking step of melt biaxial shrinking the stretched film obtained in the first melt biaxial stretching step in the x-axis direction and the y-axis direction at a temperature equal to or higher than the melting point of the stretched film.

<9> The method of producing an ultra-high molecular weight polyethylene submicron thin film according to <7> or <8>, further comprising a third step including at least one of:

a melt biaxial stretching cooling step of cooling, after the second melt biaxial stretching step, the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film; or

a melt shrinking stretching cooling step of melt biaxial shrinking, after the second melt biaxial stretching step, the stretched film in the x-axis direction and the y-axis direction at a temperature equal to or higher than the melting point of the stretched film, cooling the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film,

wherein the third step is performed once or repeated a plurality of times.

<10> The method of producing an ultra-high molecular weight polyethylene submicron thin film according to any one of <7> to <9>, further comprising a raw film preparation step of molding an ultra-high molecular weight polyethylene raw material powder having a viscosity average molecular weight of from 1 million to 15 million into a film shape at a temperature equal to or higher than a melting point of the ultra-high molecular weight polyethylene raw material powder.

<11> The method of producing an ultra-high molecular weight polyethylene submicron thin film according to <10>, wherein the raw film preparation step is a step of molding the ultra-high molecular weight polyethylene raw material powder into a film shape by press molding.

<12> The method of producing an ultra-high molecular weight polyethylene submicron thin film according to <11>, wherein the press molding is performed under reduced pressure.

In order to confirm that a UHMW-PE is contained in an ultra-high molecular weight polyethylene submicron thin film of the invention, an assay of molecular weight distribution by gel permeation chromatography (GPC) measurement using trichlorobenzene or tetrachlorobenzene as a solvent is effective. The GPC measurement can be performed by the method described in International Publication WO 2014/0344484.

In addition, in order to confirm a viscosity average molecular weight of a UHMW-PE constituting the ultra-high molecular weight polyethylene submicron thin film of the invention, measurement of a limiting viscosity in a decalin solvent (135 °C) is effective.

Advantageous Effects of Invention

According to an embodiment of the invention, there can be provided an ultra-high molecular weight polyethylene submicron thin film, having a film thickness of less than 1 $\mu$m, a high visible light transmissive property, and high tensile breaking strength and tear strength, and a method of producing the same.

BRIEF DESCRIPTION OF THE DRAWINGS

FIG. 1 is a schematic view for explaining a raw film preparation step in Example 1.
FIG. 2 is a scanning electron microscope (SEM) observation photographs of cross sections of UHMW-PE submicron thin films obtained in Examples 1 and 2.
FIG. 3 is a graph showing a melting profile when films or thin films obtained in Example 1, Comparative Example 1, and Control Example 1 were subjected to differential scanning calorimetry (DSC) measurement.
FIG. 4 is a graph showing a melting profile when films or thin films obtained in Examples 2 and 3 and Comparative Examples 2 and 3 were subjected to differential scanning calorimetry (DSC) measurement.
FIG. 5 is scanning electron microscope (SEM) observation photographs of film surfaces of films or thin films obtained in Examples 1 and 2, Comparative Examples 1 to 3, and Control Example 1.
FIG. 6 is a schematic view showing a method for an adhesion test of films or thin films obtained in Examples 1 and 2, Comparative Examples 1 to 3, and Control Example 1.

DESCRIPTION OF EMBODIMENTS

In the present specification, a numerical range described using "to" represents a numerical range including numerical values before and after "to" as a lower limit value and an upper limit value.

In the present specification, the term "step" includes not only an independent step but also a step that cannot be clearly distinguished from other steps, as long as the intended purpose of the step is achieved.

Furthermore, in the specification, the amount of each component in a composition means, when a plurality of substances corresponding to each component are present in the composition, a total amount of the plurality of substances present in the composition unless otherwise specified.

In addition, unless otherwise specified, the notation of "substituent" is used in the sense of including an unsubstituted group and a group further having a substituent, and for example, the notation of "alkyl group" is used in the sense of including both an unsubstituted alkyl group and an alkyl group further having a substituent. The same applies to other substituents.

In a numerical range described stepwise in the specification, an upper limit value or a lower limit value described in a certain numerical range may be replaced with an upper limit value or a lower limit value of another numerical range described stepwise. In addition, in a numerical range described in the specification, an upper limit value or a lower limit value described in a certain numerical range may be replaced with a value shown in the examples.

In addition, in the invention, a combination of two or more preferable aspects is a more preferable aspect.

Room temperature in the specification is defined as 20 °C.

Hereinafter, an ultra-high molecular weight polyethylene submicron thin film and a method of producing the same of the invention (hereinafter, the ultra-high molecular weight polyethylene submicron thin film of the invention is also referred to as a "UHMW-PE thin film" or a "thin film") will be described in detail. "Submicron thin film" in the invention refers to a thin film having a thickness of 1 μm or less, and is generally simply referred to as a "thin film" or an "ultrathin film" in some cases.

Ultra-High Molecular Weight Polyethylene Submicron Thin Film

The thin film of the invention contains, as a main component, an ultra-high molecular weight polyethylene (UHMW-PE) having a viscosity average molecular weight of from 1 million to 15 million, a film thickness is less than 1 μm, and a tensile breaking strength is 100 MPa or more.

Ultra-High Molecular Weight Polyethylene

Components including the UHMW-PE constituting the thin film of the invention will be described in detail, in the method of producing the thin film of the invention.

The phrase "containing, as a main component, a UHMW-PE" means that a content of a UHMW-PE is the largest among the contents of components contained in the thin film. Specifically, "containing, as a main component, a UHMW-PE" indicates that the UHMW-PE is contained in an amount of 50 mass%, 60 mass% or more, 70 mass% or more, 80 mass% or more, or 90 mass% or more with respect to the thin film.

Film Thickness

The film thickness of the thin film of the invention is 1 μm or less, and is preferably 900 nm or less, more preferably 850 nm or less, and still more preferably 500 nm or less.

The film thickness of the thin film of the invention is measured by a method shown in the examples that will be described later.

Diffused Light Transmittance, Parallel Light Transmittance, and Haze Value in Visible Light Region

The diffused light transmittance of the thin film of the invention in the visible light region is preferably 50 % or less, more preferably 40 % or less, and still more preferably 30 % or less.

The parallel light transmittance of the thin film of the invention in the visible light region is preferably 40 % or more, more preferably 50 % or more, and still more preferably 60 % or more.

The haze value of the thin film of the invention in the visible light region is preferably 50 % or less, more preferably 40 % or less, and still more preferably 30 % or less.

The diffused light transmittance, the parallel light transmittance, and the haze value of the thin film of the invention in the visible light region are values (%) in a wavelength range of from 360 to 750 nm, and are measured by a method shown in the examples that will be described later.

Tensile Breaking Strength

The tensile breaking strength of the thin film of the invention is 100 MPa or more, preferably 150 MPa or more, and more preferably 300 MPa or more.

The tensile breaking strength of the thin film of the invention is measured by a method shown in the examples that will be described later.

Tear Strength

The tear strength of the thin film of the invention is preferably 1 N/mm or more, more preferably 5 N/mm or more, and still more preferably 10 N/mm or more.
The tear strength of the thin film of the invention is measured by a method shown in the examples that will be described later.

Nitrogen Permeability Coefficient

The nitrogen permeability coefficient of the thin film of the invention is preferably $1 \times 10^{-14}$ mol·m/(m$^2$·s Pa) or less, more preferably $5 \times 10^{-15}$ mol·m/(m$^2$·s Pa) or less, and still more preferably $1 \times 10^{-15}$ mol·m/(m$^2$·s Pa) or less.
The nitrogen permeability coefficient of the thin film of the invention is measured by a method shown in the examples that will be described later.

Melting Profile

The thin film of the invention preferably has, in a melting profile recorded with a differential scanning calorimeter, one or more endothermic peaks at each of (1) from 130 °C to lower than 140 °C, (2) from 140 °C to lower than 150 °C, and (3) 150 °C or higher.
When the thin film of the invention is obtained by two-stage melt biaxial stretching that will be described later, this melting profile is obtained.
The melting profile recorded with a differential scanning calorimeter is a melting profile obtained by a "temperature rising measurement of DSC in the specification" that will be described later.

Adhesion

The adhesion coefficient obtained by an adhesion test of a thin film of the invention is preferably 1000 N/m or more, more preferably 2000 N/m or more, and still more preferably 3000 N/m or more.
When the thin film of the invention is brought into close contact with a counter material, the thin film exhibits excellent adhesion by reflecting the thinness thereof and following a shape of the counter material.
The adhesion coefficient obtained by an adhesion test of the thin film of the invention is measured by the following method.

-Adhesion Test-

A value (N/m) obtained by dividing the maximum load by a thickness of a target film is determined as an index of the adhesion (that is, the adhesion coefficient) of the target film. In this regard, the maximum load is recorded in a manner in which each of the target film and an aluminum plate (item number AL-013421, thickness 300 $\mu$m) manufactured by Nilaco Corporation as a counter material is cut into a strip shape of 1 cm in width $\times$ 5 cm in length, 20 $\mu$mL of liquid paraffin (viscosity: 0.87 g/mL at 20 °C) is uniformly applied over an entire area of 1 cm $\times$ 3 cm at a tip of the target film, areas of 1 cm $\times$ 3 cm at the tip of the target film and the aluminum plate are brought into close contact with each other such that strips of the target film and the aluminum plate are upside down, and then the ends of both strips opposite to the close contact portion are pulled vertically.
Details of the adhesion coefficient of the thin film of the invention obtained by the adhesion test will be described later in the Examples.

Method of Producing Ultra-High Molecular Weight Polyethylene Submicron Thin Film

The method of producing a thin film of the invention is a production method for obtaining a UHMW-PE submicron thin film having a film thickness of less than 1 $\mu$m, the method including a first melt biaxial stretching step, a cooling step, and a second melt biaxial stretching step.
The method of producing a thin film of the invention may use a commercially available raw film or include a raw film preparation step.
The method of producing a thin film of the invention may include a melt biaxial shrinking step between the first melt biaxial stretching step and the cooling step.

The "melt biaxial stretching" is a method of stretching a raw film or a stretched film in the x-axis direction and the y-axis direction at a temperature equal to or higher than the melting point thereof.

Each step will be described below.

Raw Film Preparation Step

In the raw film preparation step, an ultra-high molecular weight polyethylene (UHMW-PE) raw material powder having a viscosity average molecular weight of from 1 million to 15 million is molded into a film shape at a temperature equal to or higher than a melting point of the ultra-high molecular weight polyethylene raw material powder. As a result, an ultra-high molecular weight polyethylene raw film is obtained.

The UHMW-PE raw material powder is a powdered polyethylene raw material powder having a viscosity average molecular weight (Mv) of from 1 million to 15 million, more preferably a polyethylene raw material powder having an Mv of from 1 million to 10 million, and still more preferably a polyethylene raw material powder having an Mv of from 1.2 million to 6 million. That is, the Mv of the UHMW-PE contained in the thin film of the invention is preferably in the above range.

The viscosity average molecular weight is a value measured in a decalin solvent (135 °C), and a limiting viscosity ($[\eta]$) is preferably from 7 dl/g to 45 dl/g, more preferably from 7 dl/g to 35 dl/g, and still more preferably from 8 dl/g to 24 dl/g.

In the UHMW-PE, for example, as described in Japanese Patent Application Laid-Open JP 2005-314 544 A and Japanese Patent Application Laid-Open JP 2005-313 391 A, it is known that the viscosity average molecular weight and the limiting viscosity have a relationship represented by the following formula.

$$Mv = 5.37 \times 10^4 \, [\eta]^{1.49}$$

Using the above formula, the viscosity average molecular weight can be determined from the measured limiting viscosity. As the viscosity average molecular weight in the specification, a value obtained as described above is adopted.

The measurement of the molecular weight of the UHMW-PE is as described above, but when it is difficult to dissolve a UHMW-PE in a decalin solvent, the molecular weight of a UHMW-PE is measured by the following method. In this method, an ASTM D 1430-65 T method is applied, and first, a film formed from an ultra-high molecular weight polyethylene is prepared, deformation yield stress of the film in a molten state is measured, and the molecular weight is calculated.

The UHMW-PE raw material powder whose molecular weight is to be measured is molded into a film shape by melt press molding and a dumbbell-shaped test piece specified in the ASTM D 1430-65 T method is prepared. A plurality of the obtained dumbbell-shaped test pieces are prepared, loaded with different loads, and immersed in a glycol bath heated to 150 °C. The test piece is extended due to the applied load, and the time required for extension by 600 % is measured. On a logarithmic coordinate axis, the time required for the extension obtained above is plotted with respect to tensile stress applied to the test piece (value obtained by dividing the load by a cross-sectional area of the test piece). The plotted values show linearity, and from this graph, the stress ($N/mm^2$) referred to as a yield value required for the extension time of 10 minutes is determined.

The yield value in the UHMW-PE is preferably in the range of from 0.05 $N/mm^2$ to 1.5 $N/mm^2$. For example, according to documents such as the ultra-high molecular weight polyethylene (PE-UHMW) Hostalene GUR catalog (Hoechst Aktiengesellschaft, August 1993), since the yield value and the viscosity average molecular weight measured by the viscosity method are correlated, the molecular weight can be detected by the yield value measurement method.

A particle diameter of the UHMW-PE raw material powder is preferably 2000 $\mu$m or less, more preferably from 1 $\mu$m to 2000 $\mu$m, and still more preferably 10 $\mu$m to 1000 $\mu$m in terms of a volume average particle diameter ($D_{50}$).

As the UHMW-PE, a commercially available product may be used, and examples thereof include HI-ZEX MILLION 340M (trade name: Mv = $3.5 \times 10^6$) manufactured by Mitsui Chemicals, Inc., and HOSTALENE GUR 4113 (trade name: Mv = $3.2 \times 10^6$) and HOSTALENE GUR 4150 (trade name: Mv = $7.3 \times 10^6$) manufactured by Ticona.

The UHMW-PE may be a polymer polymerized using a known catalyst, and powdered polyethylene polymerized using a Ziegler catalyst or a metallocene catalyst is suitably used.

In general, it is known that the molecular weight distribution of polyethylene synthesized with a Ziegler-based catalyst is wider than that of polyethylene synthesized with a metallocene-based catalyst, and Mw/Mn is larger in the former. Here, Mw and Mn are a weight average molecular weight and a number average molecular weight, respectively, and can be determined by GPC measurement.

It is desirable that the UHMW-PE has only ethylene as a constituent unit from the viewpoint of high crystallinity and an excellent physical property such as strength. However, the UHMW-PE may be a polymer or a copolymer containing a constituent unit derived from ethylene. When the UHMW-PE is a copolymer, examples of the constituent unit for constituting the copolymer together with the ethylene constituent unit include an $\alpha$-olefin such as propylene, 1-butene, 1-hexene, 1-octene, or 4-methyl-1 pentene, and a derivative thereof. That is, the name of the UHMW-PE in the specification also includes a copolymer of ethylene and α-olefin. Therefore, the UHMW-PE also includes a polyethylene containing long chain branches such as a linear low density polyethylene and a low density polyethylene.

In the raw film preparation step, other components other than UHMW-PE may be used in combination with the UHMW-PE raw material powder within a range where the effect is not impaired. That is, the thin film of the invention may contain other components other than the UHMW-PE.

Examples of other components other than the UHMW-PE include a polymer such as a polyethylene having a lower molecular weight than that of the UHMW-PE; a known additive, for example, a component to be added to a usual polyolefin, such as a plasticizer, an antioxidant, a weathering agent, a light stabilizer, an ultraviolet absorber, a heat stabilizer, a lubricant, a mold release agent, an antistatic agent, a flame retardant, a foaming agent, a filler such as silica, an antibacterial agent, an antifungal agent, a nucleating agent, or a colorant such as a pigment.

One component or two or more components of the other components described above can be contained in the UHMW-PE raw material powder depending on the purpose within a range where the effect is not impaired.

Among the other components, as the antioxidant, a phenolic antioxidant such as Irganox 1076 (trade name) manufactured by BASF; a phosphorus antioxidant such as an ADK STAB HP-10 (trade name) manufactured by ADEKA CORPORATION; a sulfur-based antioxidant; or the like is suitably used.

Examples of a method of containing other components in the UHMW-PE raw material powder include known addition methods such as a method in which other components are mixed with the raw material powder as they are, a method in which other components are dispersed or dissolved in other solvents, then the resulting liquid is mixed with or sprayed on the raw material powder, and only the solvent is volatilized and removed, and a method in which a compounding agent is kneaded in a state in which an ultra-high molecular weight polyethylene raw material is melted.

In the raw film preparation step, a raw film is obtained by molding the UHMW-PE raw material powder described above into a film shape at a temperature equal to or higher than the melting point of the UHMW-PE raw material powder.

By molding the UHMW-PE raw material powder into a film shape at a temperature equal to or higher than the melting point of the UHMW-PE raw material powder, a raw film having improved fusibility between the UHMW-PE raw material powders is obtained.

Specifically, from the viewpoint of improving the fusibility between the UHMW-PE raw material powders, a molding temperature for the film shape molding is preferably from 130 °C to 250 °C, and more preferably from 150 °C to 200 °C.

In the specification, the "melting point" refers to an endothermic peak temperature (°C) of a melting profile obtained by temperature rising measurement with a differential scanning calorimeter (DSC). The melting point of the UHMW-PE raw material powder is in the range of about from 135 °C to 145 °C although it varies depending on a method of producing the UHMW-PE raw material and a molecular weight thereof. When there are a plurality of melting peaks in the melting profile, a temperature of the peak having the highest intensity (endothermic quantity) is defined as the melting point.

In the temperature rising measurement of DSC in the specification, a result of performing DSC measurement (measurement apparatus: diamond DSC manufactured by PerkinElmer Inc.) by raising a temperature to a temperature range of from 30 °C to 180 °C at a temperature rise rate of 10 °C/min under a nitrogen atmosphere is adopted. In this case, about 4 mg of a sample (raw material powder, film) is sealed in an aluminum pan and subjected to DSC measurement. The temperature and heat quantity are calibrated with standard substances (indium and tin).

For the molding into a film shape, press molding is preferable. The press molding is more preferably performed under reduced pressure.

The press pressure in the press molding is preferably from 0.01 MPa to 100 MPa, and more preferably from 0.1 MPa to 50 MPa.

The reduced pressure in the press molding is preferably from 10 Torr or lower, and more preferably 1 Torr or lower.

By press molding under the reduced pressure, a fusion property between the UHMW-PE raw material powders is improved and the powders are integrated. Therefore, a UHMW-PE thin film in which characteristics of a UHMW-PE are sufficiently exhibited is obtained.

For the molding into a film shape, roll molding may be used. Examples of the roll molding include a "first roll processing step" and a "second roll processing step" in the method of producing a polyethylene film described in JP 2019-193 997 A.

For the molding into a film shape, press molding and roll molding may be combined.

A film thickness of the raw film obtained in the raw film preparation step is preferably 1000 μm or less, more preferably 300 μm or less, and still more preferably 100 μm or less from the viewpoint of obtaining a UHMW-PE thin film having a thickness of less than 1 μm.

First melt biaxial Stretching Step

In the first melt biaxial stretching step, a raw film (alternatively, the raw film molded in the raw film preparation step) containing, as a main component, an ultra-high molecular weight polyethylene having a viscosity average molecular weight of 1 million to 15 million is melt biaxial stretched in an x-axis and a y-axis at a temperature equal to or higher than the melting point of the raw film.

The first melt biaxial stretching may be sequential biaxial stretching in which stretching is performed in the x-axis direction and then stretching is performed in the y-axis direction perpendicular to the x-axis direction, or may be simultaneous biaxial stretching in which stretching is performed simultaneously in the x-axis direction and the y-axis direction perpendicular to the x-axis direction.

Here, in the first melt biaxial stretching, when the stretching is performed in the x-axis direction and then stretching is performed in the y-axis direction perpendicular to the x-axis direction, a time difference is, for example, from 0.1 to 100 min.

The stretching speed in the x-axis direction and the stretching speed in the y-axis direction may be the same as or different from each other. When the stretching speed in the x-axis direction is different from the stretching speed in the y-axis direction, a speed difference is, for example, from 0.1 to 1000 mm/min.

A first melt biaxial stretching temperature is equal to or higher than the melting point of the raw film. By stretching the raw film at the temperature equal to or higher than the melting point of the raw film, it is possible to stretch the raw film up to a high ratio, which is advantageous for thinning the film and developing high strength.

Specifically, the first melt biaxial stretching temperature is preferably from 120 °C to 180 °C, more preferably from 130 °C to 180 °C, still more preferably from 136 °C to 180 °C, and most preferably from 136 °C to 170 °C. The temperature may be varied during the first melt biaxial stretching as long as the temperature is within the temperature range.

Temperature conditions in the first melt biaxial stretching may be appropriately selected depending on the viscosity average molecular weight (Mv) or a copolymerization composition of the UHMW-PE raw material powder as a raw material of the raw film. For example, when the viscosity average molecular weight of the UHMW-PE is about 1 million, the temperature is preferably about from 136 °C to 145 °C near the melting point, but since as the molecular weight increases, the thermal characteristics of the molded film change, a biaxial stretching processing can be performed under higher temperature conditions.

A stretch ratio in the first melt biaxial stretching is preferably twice or more, and more preferably 5 times or more the length of the raw film in both the x-axis direction and the y-axis direction. The stretch ratios in the x-axis direction and the y-axis direction may be the same as or different from each other.

The stretching speed in the first melt biaxial stretching is preferably in a range of 1 mm/min to 1000 mm/min, and more preferably in a range of 10 mm/min to 500 mm/min.

When the first melt biaxial stretching is performed at a stretching speed of less than 1 mm/min, a film in a molten state warps and hangs down, as a result of which a thin film having high strength cannot be obtained.

A holding step of holding at a temperature at which the first melt biaxial stretching is performed for a certain period of time before the first melt biaxial stretching may be included. In this case, the time for holding at the temperature is preferably from 1 minute to 180 minutes, and more preferably from 1 minute to 10 minutes.

In the first melt biaxial stretching, in order to efficiently perform biaxial stretching in a molten state, it is preferable to perform stretching in a state where only a center portion of the raw film is melted and a chuck portion (end portion) is not melted using a hot air blowing type biaxial stretching machine or the like. In this case, the biaxial stretching machine is preferably a biaxial stretching machine including a stress detection mechanism such that it can be confirmed that the biaxial stretching is performed in a molten state. In addition, since the chuck portion (end portion) has a film thickness gradually decreasing with stretching and becomes slippery, the biaxial stretching machine preferably includes a chuck mechanism such as an air chuck mechanism to which a constant gripping force is always applied.

The film thickness of the stretched film obtained in the first melt biaxial stretching step is preferably 500 $\mu$m or less, more preferably 150 $\mu$m or less, and still more preferably 50 $\mu$m or less from the viewpoint of obtaining a UHMW-PE thin film having a film thickness of less than 1 $\mu$m.

Melt Biaxial Shrinking Step

In the melt biaxial shrinking step, before the cooling step, the stretched film obtained in the first melt biaxial stretching step (hereinafter, also referred to as a "first stretched film") is melt biaxial shrunk in the x-axis direction and the y-axis direction at a temperature equal to or higher than the melting point of the stretched film. The melt biaxial shrinking step is a step optionally performed.

When the first stretched film is subjected to melt shrinking after the first melt biaxial stretching, folded chain crystals of the UHMW-PE become uniform. Therefore, when the first stretched film is subjected to second melt biaxial stretching that will be described later using this structure of the UHMW-PE as a starting form, the second melt biaxial stretching can be performed up to a higher ratio due to the uniformization of the film structure. This makes it easy to obtain a UHMW-PE thin film having a film thickness of less than 1 μm.

The melt biaxial shrinking may be sequential biaxial shrinking in which shrinking is performed in the x-axis direction and then shrinking is performed in the y-axis direction perpendicular to the x-axis direction, or may be simultaneous biaxial shrinking in which shrinking is performed simultaneously in the x-axis direction and the y-axis direction perpendicular to the x-axis direction.

The melt biaxial shrinking may be performed immediately after the first melt biaxial stretching is performed, or may be performed after holding at a temperature at which the melt biaxial shrinking is performed for a certain period of time (for example, about 1 to 10 minutes) after the first melt biaxial stretching is performed.

Specifically, a temperature at which the melt biaxial shrinking is performed is preferably from 80 °C to 180 °C, more preferably from 120 °C to 165 °C, still more preferably from 136 °C to 165 °C, and particularly preferably from 140 °C to 155 °C. The temperature may be varied during the melt biaxial shrinking as long as the temperature is within the temperature range.

A shrinking percentage as the length after shrinking in the melt biaxial shrinking is preferably from 5 % to 95 %, and more preferably from 20 % to 75 % of the length before shrinking (the length of the first stretched film immediately after the first melt biaxial stretching) in both the x-axis direction and the y-axis direction. The shrinking percentages in the x-axis direction and the y-axis direction may be the same as or different from each other.

(Cooling Step)

In the cooling step, the first stretched film (alternatively, the first stretched film shrunk in the melt biaxial shrinking step) stretched in the first melt biaxial stretching step is cooled to a temperature equal to or lower than the melting point of the first stretched film.

Specifically, in the cooling step, the first stretched film is cooled at a cooling rate of, for example, 1 °C/min to 1000 °C/min to a temperature equal to or higher than room temperature but equal to or lower than the melting point of the first stretched film.

(Second Melt Biaxial Stretching Step)

In the second melt biaxial stretching step, the first stretched film cooled in the cooling step is melt biaxial stretched again in the x-axis direction and the y-axis direction at a temperature equal to or higher than the melting point of the first stretched film.

The second melt biaxial stretching may be sequential biaxial stretching in which stretching is performed in the x-axis direction and then stretching is performed in the y-axis direction perpendicular to the x-axis direction, or may be simultaneous biaxial stretching in which stretching is performed simultaneously in the x-axis direction and the y-axis direction perpendicular to the x-axis direction.

Here, in the second melt biaxial stretching, when the stretching is performed in the x-axis direction and then stretching is performed in the y-axis direction perpendicular to the x-axis direction, a time difference is, for example, from 0.1 to 100 min.

The stretching speed in the x-axis direction and the stretching speed in the y-axis direction may be the same as or different from each other. When the stretching speed in the x-axis direction is different from the stretching speed in the y-axis direction, a speed difference is, for example, from 0.1 to 1000 mm/min.

A second melt biaxial stretching temperature is equal to or higher than the melting point of the first stretched film. By stretching the first stretched film at the temperature equal to or higher than the melting point of the first stretched film, it is possible to stretch the film up to a high ratio, which is advantageous for thinning the film and developing high strength. The resulting UHMW-PE thin film is a pore-free film, as a result of which a thin film having high visible light transmissive property and barrier property is obtained.

Specifically, the second melt biaxial stretching temperature is preferably from 120 °C to 180 °C, more preferably from 130 °C to 180 °C, still more preferably from 136 °C to 180 °C, and most preferably from 136 °C to 170 °C. The temperature may be varied during the second melt biaxial stretching as long as the temperature is within this temperature range.

Temperature conditions in the first melt biaxial stretching may be appropriately selected depending on the viscosity average molecular weight (Mv) or a copolymerization composition of the UHMW-PE raw material powder as a raw material of the raw film. For example, when the viscosity average molecular weight of the UHMW-PE is about 1 million, the temperature is preferably about from 136 °C to 145 °C near the melting point, but since as the molecular weight increases, the thermal characteristics of the molded film change, a biaxial stretching processing can be performed under higher temperature conditions.

A stretch ratio in the second melt biaxial stretching is preferably 5 times or more, more preferably 10 times or more, and still more preferably 20 times or more the length of the raw film in both the x-axis direction and the y-axis direction. The stretch ratios in the x-axis direction and the y-axis direction may be the same as or different from each other.

Here, the ratio between the stretch ratio in the first melt biaxial stretching and the stretch ratio in the second melt biaxial stretching (the stretch ratio in the second melt biaxial stretching/the stretch ratio in the first melt biaxial stretching) is preferably from 1.1 times to 20 times, and more preferably 2 times to 10 times in both the x-axis direction and the y-axis direction.

The stretching speed in the second melt biaxial stretching is preferably in a range of 1 mm/min to 1000 mm/min, and more preferably in a range of 10 mm/min to 500 mm/min.

When the second melt biaxial stretching is performed at a stretching speed of less than 1 mm/min, a film in a molten state warps and hangs down, as a result of which a thin film having high strength cannot be obtained.

A holding step of holding at a temperature at which the first melt biaxial stretching is performed for a certain period of time before the second melt biaxial stretching may be included. In this case, the time for holding at the temperature is preferably from 1 minute to 180 minutes, and more preferably from 1 minute to 10 minutes.

In the second melt biaxial stretching, in order to efficiently perform biaxial stretching in a molten state, it is preferable to perform stretching in a state where only a center portion of the first stretched film is melted and a chuck portion (end portion) is not melted using a hot air blowing type biaxial stretching machine or the like. In this case, the biaxial stretching machine is preferably a biaxial stretching machine including a stress detection mechanism such that it can be confirmed that the biaxial stretching is performed in a molten state. In addition, since the chuck portion (end portion) has a film thickness gradually decreasing with stretching and becomes slippery, the biaxial stretching machine preferably includes a chuck mechanism such as an air chuck mechanism to which a constant gripping force is always applied.

The second melt biaxial stretching is performed until the film thickness of the obtained second stretched film becomes less than 1 $\mu$m. After the second melt biaxial stretching is performed, for example, the obtained second stretched film is cooled to room temperature.

A heat treatment may be performed after the second melt biaxial stretching is performed or after cooling is performed. Specifically, a heat treatment temperature is preferably from 100 °C to 180 °C, and more preferably from 120 °C to 160 °C. The temperature may be varied during the heat treatment as long as the temperature is within the temperature range.

In this case, the time for performing the heat treatment is preferably from 1 minute to 180 minutes, and more preferably from 1 minute to 10 minutes.

In the method of producing a thin film of the invention, a UHMW-PE thin film having a film thickness of less than 1 $\mu$m is obtained through the steps described above.

The method of producing a thin film of the invention may further include a third step including at least one of: a melt biaxial stretching cooling step of cooling, after the second melt biaxial stretching step, the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film; or a melt shrinking stretching cooling step of melt biaxial shrinking, after the second melt biaxial stretching step, the stretched film in the x-axis direction and the y-axis direction at a temperature equal to or higher than the melting point of the stretched film, cooling the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film. The third step may be performed once or repeated a plurality of times.

In the method of producing a thin film of the invention, the obtained UHMW-PE thin film may be subjected to a post-treatment.

Examples of the post-treatment include a treatment in which the UHMW-PE is crosslinked by irradiating the UHMW-PE thin film with an electron beam or irradiating the thin film with a radiation.

By the post-treatment, a chemical resistance, dimensional stability, heat resistance, and the like of the UHMW-PE thin film can be further improved.

EXAMPLES

Hereinafter, a production method of the invention will be described in detail with reference to Examples. The following examples are merely representative examples, and various modification examples can be implemented without departing from the gist of the invention, and the invention is not limited to the following examples at all.

[Example 1]

First, a UHMW-PE raw film was molded as follows (raw film preparation step).

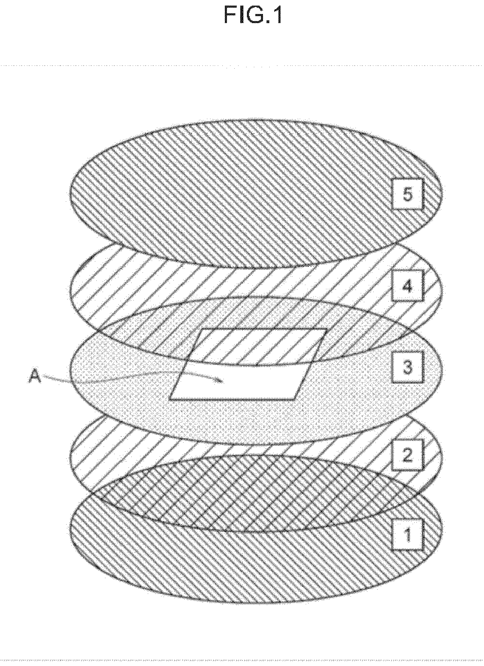

As shown in FIG. 1, a release polyimide film (2) having a thickness of 125 $\mu$m was placed on a disc-shaped stainless steel plate (1) having a diameter of 150 mm$\varphi$ $\times$ a thickness of 2 mm, next a disc-shaped stainless steel plate having a diameter of 150 mm$\varphi$ $\times$ a thickness of 0.30 mm with a rectangular window (indicated as a region A in FIG. 1) of 100 mm $\times$ 100 mm hollowed out (3) was placed thereon, and about 3.0 g of a powdered UHMW-PE raw material (Hizex Million 340M manufactured by Mitsui Chemicals, Inc., viscosity average molecular weight of 3.3 million, and average particle diameter of 150 $\mu$m) was placed in the rectangular window A. A release polyimide film (4) having a thickness of 125 $\mu$m was placed thereon, and (5) having a diameter of 150 mmcp $\times$ a thickness of 2 mm was further placed thereon.

The entirety was placed between upper and lower press plates in a press machine (manufactured by Baldwin Technology Co.) installed in a vacuum chamber at room temperature (25 °C), the pressure was reduced to 1 $\times$ 10$^{-1}$ Torr by a rotary pump, thereafter, a distance between the upper and lower press plates was made as close as possible so as not to apply stress, heating was performed to 200 °C, the temperature was maintained at 200 °C, and the plates were held for 5 minutes, then in a state where the pressing was performed at a pressure of 4.5 MPa (cylinder pressure: 60 MPa), the heater power was turned off, and the plates was slowly cooled to room temperature (25 °C) in a reduced pressure state. Thereafter, the vacuum chamber was opened to take out the UHMW-PE raw film. A film thickness of the obtained UHMW-PE raw film was about 0.30 mm.

The obtained UHMW-PE raw film was cut into an initial length of 65 mm $\times$ 65 mm, set in a large biaxial stretching machine described in WO 2018/088280 equipped with an air chuck function and a stress detector, and heated by blowing hot air. After holding at 155 °C for 5 minutes, simultaneous biaxial stretching was performed in the x-axis direction and the y-axis direction at a stretching temperature of 155 °C and a stretching speed of 180 mm/min (first melt biaxial stretching step). The stretch ratio was set to 7 times $\times$ 7 times.

This was cooled to room temperature and taken out from the large biaxial stretching machine (cooling step).

The obtained first stretched film was cut into an initial length of 35 mm $\times$ 35 mm, set in a plane expansion stretching machine (manufactured by Island Industry Co., Ltd.) equipped with an air chuck function and a stress detector, and heated by blowing hot air. After holding at 155 °C for 5 minutes, simultaneous biaxial stretching was performed in the x-axis direction and the y-axis direction at a stretching temperature of 155 °C and a stretching speed of 20 mm/min (second melt biaxial stretching step). The stretch ratio was set to 4 times $\times$ 4 times. Therefore, a total stretch ratio based on the raw film (press-molded UHMW-PE raw film) was 28 times $\times$ 28 times.

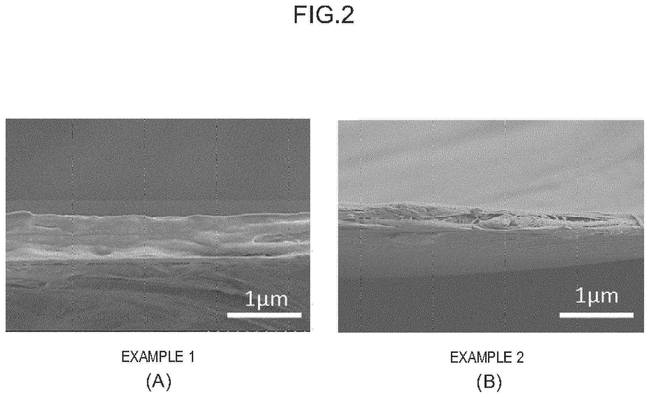

A cross section of the obtained UHMW-PE thin film was observed by SEM, and a film thickness thereof was 853 nm (FIG. 2(A)). The film thickness of the UHMW-PE thin film is an average value of thicknesses at five points by SEM observation for the cross section.

In addition, the obtained UHMW-PE thin film had the tensile breaking strength of 201 MPa, the tear strength of 14.5 N/mm, and the nitrogen permeability coefficient of 1.48 $\times$ 10$^{-16}$ mol·m/(m$^2$·s·Pa). Furthermore, in the visible light region, the total light transmittance was 88.6 %, the diffused light transmittance was 32.2 %, the parallel light transmittance was 56.3 %, and the haze value was 36.4 %.

Furthermore, the obtained UHMW-PE thin film was subjected to an adhesion test using an aluminum plate as a counter material, and an adhesion coefficient of 3660 N/m was obtained.

[Example 2]

A UHMW-PE raw film was molded in the same manner as in Example 1 (raw film preparation step). The stretch ratio in the first melt biaxial stretching step was set to 10 times $\times$ 10 times, and simultaneous biaxial shrinking was performed up to a stretch ratio of 7 times $\times$ 7 times in the x-axis direction and the y-axis direction at a shrinking speed of 180 mm/min while the temperature was maintained at 155 °C (melt shrinking step). This was cooled to room temperature in the same manner as in Example 1 and taken out from the large biaxial stretching machine (cooling step). The stretch ratio in the second melt biaxial stretching step was 5 times $\times$ 5 times. Therefore, the total stretch ratio was 35 times $\times$ 35 times.

A cross section of the obtained UHMW-PE thin film was observed by SEM, and a film thickness thereof was 354 nm (FIG. 2(B)).

In addition, the obtained UHMW-PE thin film had the tensile breaking strength of 304 MPa, the tear strength of 36.7 N/mm, and the nitrogen permeability coefficient of 2.63 $\times$ 10$^{-15}$ mol·m/(m$^2$·s·Pa). Furthermore, in the visible light region, the total light transmittance was 88.6 %, the diffused light transmittance was 25.4 %, the parallel light transmittance was 63.1 %, and the haze value was 28.7 %.

Furthermore, the obtained UHMW-PE thin film was subjected to an adhesion test using an aluminum plate as a counter material, and an adhesion coefficient of 4810 N/m was obtained.

[Example 3]

A UHMW-PE thin film was prepared in the same manner as in Example 2 except that the stretch ratio in the second melt biaxial stretching step was set to 4 times × 4 times. Therefore, the total stretch ratio was 28 times × 28 times.

A cross section of the obtained UHMW-PE thin film was observed by SEM, and a film thickness thereof was 841 nm.

In addition, the obtained UHMW-PE thin film had the tensile breaking strength of 156 MPa, the tear strength of 15.2 N/mm, and the nitrogen permeability coefficient of $6.10 \times 10^{-18}$ mol·m/(m²·s·Pa). Furthermore, in the visible light region, the total light transmittance was 88.6 %, the diffused light transmittance was 31.0 %, the parallel light transmittance was 57.6 %, and the haze value was 35.0 %.

Furthermore, the obtained UHMW-PE thin film was subjected to an adhesion test using an aluminum plate as a counter material, and an adhesion coefficient of 3340 N/m was obtained.

[Comparative Example 1]

A UHMW-PE film was molded in the same manner as in Example 1 (raw film preparation step). The stretch ratio in the first melt biaxial stretching step was set to 7 times × 7 times, and the film was cooled to room temperature in the same manner as in Example 1 and taken out from the large biaxial stretching machine (cooling step).

A film thickness of the obtained UHMW-PE stretched film was measured with a micrometer, and the thickness was 23 μm.

In addition, the obtained UHMW-PE stretched film had the tensile breaking strength of 65.1 MPa, the tear strength of 12.3 N/mm, and the nitrogen permeability coefficient of $1.56 \times 10^{-16}$ mol·m/(m²·s·Pa). Furthermore, in the visible light region, the total light transmittance was 93.6 %, the diffused light transmittance was 78.5 %, the parallel light transmittance was 15.1 %, and the haze value was 83.9 %.

Furthermore, the obtained UHMW-PE stretched film was subjected to an adhesion test using an aluminum plate as a counter material, and an adhesion coefficient of 165 N/m was obtained.

[Comparative Example 2]

A UHMW-PE raw film was molded in the same manner as in Example 1 (raw film preparation step). The stretch ratio in the first melt biaxial stretching step was set to 10 times × 10 times, and simultaneous biaxial shrinking was performed up to a stretch ratio of 7 times × 7 times while the temperature was maintained at 155 °C in the same manner as in Example 2 (shrinking step), and the film was cooled to room temperature and taken out from the biaxial stretching machine (cooling step).

A film thickness of the obtained UHMW-PE stretched film was measured with a micrometer, and the thickness was 26 μm.

In addition, the obtained UHMW-PE stretched film had the tensile breaking strength of 36.8 MPa, the tear strength of 9.9 N/mm, and the nitrogen permeability coefficient of $1.39 \times 10^{-16}$ mol·m/(m²·s·Pa). Furthermore, in the visible light region, the total light transmittance was 96.5 %, the diffused light transmittance was 87.8 %, the parallel light transmittance was 8.7 %, and the haze value was 90.4 %.

Furthermore, the obtained UHMW-PE stretched film was subjected to an adhesion test using an aluminum plate as a counter material, and an adhesion coefficient of 667 N/m was obtained.

[Comparative Example 3]

A UHMW-PE stretched film was prepared in the same manner as in Comparative Example 1 except that the stretch ratio in the first melt biaxial stretching step was 10 times × 10 times.

A film thickness of the obtained UHMW-PE stretched film was measured with a micrometer, and the thickness was 15 μm.

In addition, the obtained UHMW-PE stretched film had the tensile breaking strength of 93 MPa and the tear strength of 14.1 N/cm.

[Comparative Example 4]

In order to verify the effectiveness of interposing the cooling step between the first melt biaxial stretching step and the second melt biaxial stretching step, it was attempted to sequentially perform the first melt biaxial stretching step and the second melt biaxial stretching step without taking out the UHMW-PE stretched film from the stretching machine (without cooling).

Here, in order to make the film thickness of a UHMW-PE raw film having a thickness of about 0.30 mm less than 1 $\mu$m by melt biaxial stretching, at least a stretch ratio of 24 times × 24 times is required by analogy with Example 1, but the maximum stretch ratio in a large biaxial stretching machine described in WO 2018/088280 is 20 times × 20 times, and in order to achieve a film thickness of less than 1 $\mu$m by sequentially performing the first melt biaxial stretching step and the second melt biaxial stretching step, it is necessary to thin the UHMW-PE raw film. Therefore, by setting the thickness of the disc-shaped stainless steel plate with a rectangular window hollowed out in FIG. 1 to 150 $\mu$m, a UHMW-PE raw film having a thickness of about 0.15 mm was obtained (raw film preparation step).

This was set in the large biaxial stretching machine in the same manner as in Example 1, and after holding at 155 °C for 5 minutes, simultaneous biaxial stretching was performed in the x-axis direction and the y-axis direction at a stretching temperature of 155 °C and a stretching speed of 180 mm/min (first melt biaxial stretching step). The stretch ratio was set to 6 times × 6 times.

Thereafter, after holding at 155 °C for 5 minutes without taking out from the large biaxial stretching machine, simultaneous biaxial stretching was performed in the x-axis direction and the y-axis direction at a stretching temperature of 155 °C and a stretching speed of 20 mm/min (second melt biaxial stretching step). However, the film was broken before the total stretch ratio reached 11 times × 11 times, and a UHMW-PE thin film was not obtained.

[Comparative Example 5]

As in Comparative Example 4, in order to verify the effectiveness of interposing the cooling step between the melt biaxial shrinking step after the first melt biaxial stretching step and the second melt biaxial stretching step, it was attempted to sequentially perform the first melt biaxial stretching step, the melt biaxial shrinking step, and the second melt biaxial stretching step without taking out the UHMW-PE stretched film from the stretching machine (without cooling).

A UHMW-PE raw film having a thickness of about 0.15 mm was molded in the same manner as in Comparative Example 4 (raw film preparation step). The stretch ratio in the first melt biaxial stretching step was set to 6 times × 6 times, and simultaneous biaxial shrinking was performed up to a stretch ratio of 4 times × 4 times in the x-axis direction and the y-axis direction at a shrinking speed of 180 mm/min while the temperature was maintained at 155 °C (melt shrinking step). After holding at 155 °C for 5 minutes without taking out from the large biaxial stretching machine similarly to Example Y, simultaneous biaxial stretching was performed in the x-axis direction and the y-axis direction at a stretching temperature of 155 °C and a stretching speed of 20 mm/min (second melt biaxial stretching step). However, the film was broken before the total stretch ratio reached 11 times × 11 times, and a UHMW-PE thin film was not obtained.

[Control Example 1]

A UHMW-PE raw film was molded in the same manner as in Example 1 (raw film preparation step).

A film thickness of the obtained UHMW-PE raw film was measured with a micrometer, and the thickness was 351 $\mu$m.

In addition, the obtained UHMW-PE raw film had the tensile breaking strength of 33.5 MPa, the tear strength of 32.2 N/cm, and the nitrogen permeability coefficient of $2.83 \times 10^{-15}$ mol·m/(m$^2$·s·Pa). Furthermore, in the visible light region, the total light transmittance was 80.9 %, the diffused light transmittance was 65.9 %, the parallel light transmittance was 15.0 %, and the haze value was 81.5 %.

Furthermore, the obtained UHMW-PE raw film was subjected to an adhesion test using an aluminum plate as a counter material, and an adhesion coefficient of 6.68 N/m was obtained.

<Performance Evaluation>

1. Tensile test

For the UHMW-PE films or thin films of Examples 1 to 3, Comparative Examples 1 to 3, and Control Example 1, the tensile breaking strength was evaluated.

From the film or thin film, a dumbbell piece having an initial length of 12 mm and a width of 3 mm of a linear portion to be subjected to a tensile test was cut out in the x-axis direction. These test pieces were subjected to a tensile test at a test speed of 20 mm/min and room temperature using a TENSILON universal testing machine RTC-1325A manufactured by ORIENTEC Co. A value obtained by dividing the maximum stress of the recorded stress chart by a film cross-sectional area was taken as the tensile breaking strength.

As a result, as described above, the tensile breaking strengths of the UHMW-PE thin films of Examples 1 to 3 were 100 MPa or more, which was high strength as compared with the UHMW-PE films of Comparative Examples 1 to 3 and Control Example 1, in spite of the thin film of less than 1 $\mu$m.

2. Tear test

For the UHMW-PE films or thin films of Examples 1 to 3, Comparative Examples 1 to 3, and Control Example 1, the tear strength was evaluated.

A test piece having a length of 40 mm and a width of 12.5 mm was cut out from the film or the thin film in the x-axis direction. A cut having a length of 20 mm was made in a central portion of the test piece, the remaining 20 mm of the test piece was pulled up and down, the maximum stress when the test piece was torn was recorded, and a value obtained by dividing the maximum stress by the film thickness was taken as the tear strength. Also in this measurement, using a TENSILON universal testing machine RTC-1325A manufactured by ORIENTEC Co., a tear test was performed at a test speed of 100 mm/min and room temperature to determine the tear strength.

As a result, as described above, the tear strengths of the UHMW-PE thin films of Examples 1 to 3 were 10 N/mm or more, which was high strength as compared with the UHMW-PE films of Comparative Examples 1 to 3 and Control Example 1, in spite of the thin film of less than 1 $\mu$m.

3. Differential Scanning Calorimeter (DSC) Measurement

For the UHMW-PE films or thin films of Examples 1 to 3, Comparative Examples 1 to 3, and Control Example 1, melting behavior was compared by DSC measurement in order to examine a structural change in each step.

The DSC measurement was performed using Diamond DSC manufactured by Perkin Elmer under a nitrogen atmosphere in a temperature range of from 30 °C to 180 °C at a temperature rising rate of 10 °C/min and a sample weight of about 4 mg. Incidentally, temperature and heat quantity corrections were performed using indium and tin as standard substances.

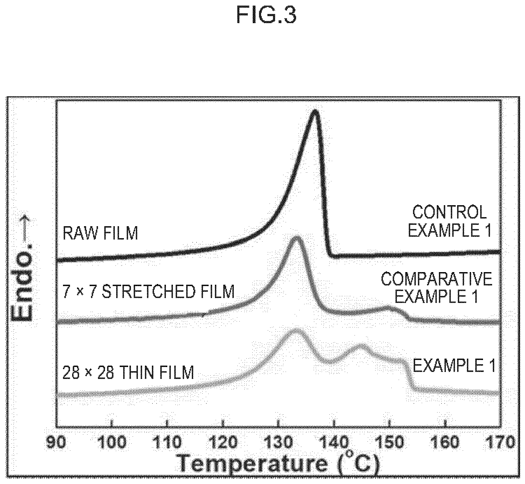

FIG. 3 shows DSC melting curves of a raw film (Control Example 1), a UHMW-PE stretched film (Comparative Example 1) obtained by subjecting the raw film to first melt biaxial stretching up to 7 times × 7 times, and a UHMW-PE thin film (Example 1) obtained by further subjecting the UHMW-PE stretched film subjected to first melt biaxial stretching to second melt biaxial stretching up to 4 times × 4 times (total stretch ratio: 28 times × 28 times).

In the raw film (Control Example 1), only an endothermic peak derived from the folded chain crystal (FCC) is observed. On the other hand, in the stretched film subjected to the first melt biaxial stretching (Comparative Example 1), a peak derived from an extended chain crystal (ECC) is observed at around 153 °C. In the UHMW-PE thin film (Example 1) obtained by subjecting the stretched film to second melt biaxial stretching, a peak derived from ECC increases, and a new endothermic peak appears around 143 °C which is an intermediate position between these peaks.

In this manner, it is found that the UHMW-PE thin film of Example 1 subjected to second melt biaxial stretching has, in a melting profile recorded with a differential scanning calorimeter, one or more endothermic peaks at each of (1) from 130 °C to lower than 140 °C, (2) from 140 °C to lower than 150 °C, and (3) 150 °C or higher.

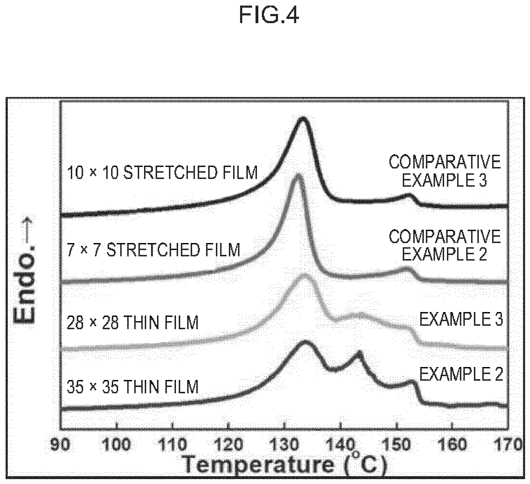

In addition, FIG. 4 shows DSC melting curves of a UHMW-PE stretched film (Comparative Example 3) obtained by subjecting the raw film (Reference Example 1) to first melt biaxial stretching up to 10 times × 10 times, a UHMW-PE stretched film (Comparative Example 2) obtained by subjecting the raw film to the first melt biaxial stretching up to 10 times × 10 times and then to melt shrinking up to 7 times × 7 times, a UHMW-PE thin film (Example 3) obtained by further subjecting the UHMW-PE stretched film (Comparative Example 2) subjected to the melt shrinking to second melt biaxial stretching up to 4 times × 4 times (total stretch ratio: 28 times × 28 times), and a UHMW-PE thin film (Example 2) obtained by further subjecting the UHMW-PE stretched film (Comparative Example 2) similarly subjected to melt shrinking to the second melt biaxial stretching up to 5 times × 5 times (total stretch ratio: 35 times × 35 times).

In the UHMW-PE stretched film (Comparative Example 2) subjected to the melt shrinking after the first melt biaxial stretching, it is found that a peak width derived from FCC is narrower than that of the UHMW-PE stretched film (Comparative Example 3) subjected to the first melt biaxial stretching, and the structure is uniformized.

In the UHMW-PE thin film (Example 3 and Example 2) obtained by subjecting the UHMW-PE stretched film (Comparative Example 2) subjected to the melt shrinking to the second melt biaxial stretching, a peak around 143 °C is confirmed, similarly to the UHMW-PE thin film (Example 1) obtained by performing two-stage melt biaxial stretching (first melt biaxial stretching and second melt biaxial stretching) without the melt shrinking step shown in FIG. 3.

That is, it is found that the UHMW-PE thin films of Examples 2 and 3 also have, in a melting profile recorded with a differential scanning calorimeter, one or more endothermic peaks at each of (1) from 130 °C to lower than 140 °C, (2) from 140 °C to lower than 150 °C, and (3) 150 °C or higher.

4. Scanning Electron Microscope (SEM) Observation

For the UHMW-PE films or thin films of Examples 1 to 3, Comparative Examples 1 to 3, and Control Example 1, SEM observation of the film surface was performed in order to confirm a crystal structure (folded chain crystal: FCC structure, extended chain crystal: ECC structure).

The SEM measurement was performed using an S-4800 type field emission scanning electron microscope (FE-SEM) manufactured by Hitachi High-Technologies Corporation. The measurement was performed under the conditions of an acceleration voltage of 2.0 kV and an emission voltage of 10 μA.

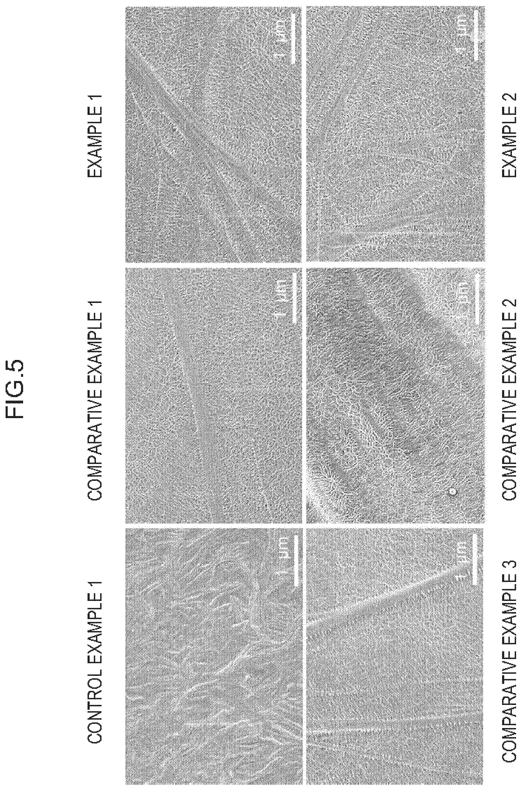

As shown in FIG. 5, in the raw film (Control Example 1), an FCC structure derived from spherulites is observed, and in the stretched film (Comparative Example 1) obtained by subjecting the raw film (Control Example 1) to first melt biaxial stretching up to 7 times × 7 times, a fibril structure belonging to an ECC structure and an FCC structure grown therefrom are observed. Also in the stretched films of Comparative Examples 2 and 3, a fibril structure belonging to an ECC structure and an FCC structure grown therefrom are observed.

In the thin film (Example 1) obtained by subjecting the stretched film (Comparative Example 1) subjected to first melt biaxial stretching to the second melt biaxial stretching up to 4 times × 4 times (total stretch ratio: 28 times × 28 times), it is found that a thinner and bent ECC structure is exhibited. This is also observed in the thin film (Example 2) obtained by two-stage melt biaxial stretching including the melt shrinking step (total stretch ratio: 35 times × 35 times), and it is presumed that due to the coexistence of these two types of ECC structures, a self-standing thin film was obtained even when the thickness was reduced to a film thickness of less than 1 μm.

5. Measurement of Total Light Transmittance, Diffused Light Transmittance, Parallel Light Transmittance, and Haze Value

For the UHMW-PE films or thin films of Examples 1 to 3, Comparative Examples 1 to 3, and Control Example 1, the haze value was measured for evaluating the visible light transmissive property. In the haze value measurement, a total light transmittance (%), a diffused light transmittance (%), a parallel light transmittance (%), and a haze value (%) in a visible light region (range of 360 to 750 nm) were measured as indices of haze in accordance with JIS K 7361: (1997) using a HZ-2 haze meter manufactured by Suga Test Instruments Co., Ltd.

As a result, as described above, the UHMW-PE thin films of Examples 1 to 3 had, in the visible light region, a total light transmittance of 80 % or more, a diffused light transmittance of 40 % or less, a parallel light transmittance of 40 % or more, and a haze value of 40 % or less, and exhibited high transparency.

6. Nitrogen permeability coefficient

In order to evaluate the barrier property of the UHMW-PE films or thin films of Examples 1 to 3, Comparative Examples 1 to 3, and Control Example 1, the nitrogen permeability coefficient was measured at room temperature using a K-315N-01 type film diffusion measuring apparatus manufactured by TSUKUBARIKASEIKI Co., Ltd. Nitrogen was used as the permeating gas, a data logger GL20 manufactured by Graphtec Corporation was connected to a permeation apparatus, voltages on a low pressure side and a high pressure side (1 V = 1.6 MPa) and the permeation time were recorded, and a nitrogen permeability coefficient ρ was determined by the following Equations (1) and (2). The sample piece was cut into a circle having a diameter of 30 mm.

$$Q = (V/(R \times T \times P \times A)) \times (dp/dt) \qquad \ldots \text{Equation (1)}$$

$$\rho = Q \times L \qquad \text{Equation (2)}$$

Q: Nitrogen permeability [mol/(m$^2$·s Pa)]
ρ: Nitrogen permeability coefficient [mol·m/(m$^2$·s ·Pa)]
V: Low-pressure side volume of cell [L]
A: Transmission area [m$^2$]
T: Test temperature [K]
P: Supplied gas differential pressure [Pa]
dp/dt: change in pressure (p) on low pressure side in unit time (t) [Pa/s]
L: Sample thickness [m]

7. Adhesion test

For the UHMW-PE films or thin films of Examples 1 to 3, Comparative Examples 1 to 3, and Control Example 1, the adhesion test was performed by the following method.

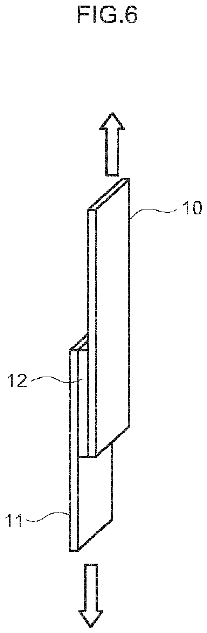

As shown in FIG. 6, a target film or thin film was cut into a strip shape having a width of 1 cm × a length of 5 cm, and 20 μL of liquid paraffin (viscosity: 0.87 g/mL at 20 °C) was uniformly applied to the entire area of 1 cm × 3 cm at the tip. Using an aluminum plate manufactured by Nilaco Corporation (item number AL-013421) having a thickness of 300 μm, which has been cut into a strip shape having a width of 1 cm × a length of 5 cm, as a counter material, the strips of the target film and the aluminum plate are stacked so as to be upside down. As a result, the area of 1 cm × 3 cm of the tip of the strip of the target film or thin film and the area of 1 cm × 3 cm of the tip of the strip of the aluminum plate as the counter material can be brought into close contact with each other.

In the same manner as in the tensile test described above, using a TENSELON universal testing machine RTC-1325A manufactured by ORIENTEC Co., the ends of both strips opposite to the close contact portion were fixed to upper and lower chuck portions, respectively, and pulled in a vertical direction at a test speed of 5 mm/min and room temperature. A value (N/m) obtained by dividing the maximum load of the stress chart recorded at this time by a film thickness of the target film or thin film was used as an index of adhesion (that is, the adhesion coefficient).

Here, in FIG. 6, reference numeral 10 denotes a target film or thin film, reference numeral 11 denotes an aluminum plate, and reference numeral 12 denotes liquid paraffin.

As a result, as described above, the nitrogen permeability coefficients of the UHMW-PE thin films of Examples 1 to 3 were approximately the same as or lower than those of the UHMW-PE films of Comparative Examples 1 to 3 and Control Example 1, and superior barrier property was exhibited as compared with the UHMW-PE films of Comparative Examples 1 to 3 and Control Example 1, in spite of the thin film of less than 1 μm.

From the above, it is found that the UHMW-PE thin films of Examples 1 to 3 have a film thickness of less than 1 μm, and have a high tensile breaking strength.

It is also found that the UHMW-PE thin films of Examples 1 to 3 have high tensile breaking strength and tear strength. It is found that the nitrogen permeability coefficient is low and the barrier property is also high. Furthermore, it is found that the total light transmittance is high, the diffused light transmittance is low, the parallel light transmittance is high, and the haze value is low. Therefore, transparency is excellent.

Description of Reference Numerals

1 Disc-shaped stainless steel plate
2 Release polyimide film
3 Disc-shaped stainless steel plate with rectangular window hollowed out
4 Release polyimide film
5 Disc-shaped stainless steel plate

The disclosure of Japanese Patent Application No. 2021-091702 is incorporated herein by reference in its entirety.

All documents, patent applications, and technical standards described in this specification are incorporated herein by reference to the same extent as if each individual document, patent application, or technical standard was specifically and individually indicated to be incorporated by reference.

**Claims**

1. An ultra-high molecular weight polyethylene submicron thin film, comprising, as a main component, an ultra-high molecular weight polyethylene having a viscosity average molecular weight of from 1 million to 15 million, wherein a film thickness is less than 1 μm, and a tensile breaking strength is 100 MPa or more.

2. The ultra-high molecular weight polyethylene submicron thin film according to claim 1, wherein a tear strength is 5 N/mm or more.

3. The ultra-high molecular weight polyethylene submicron thin film according to claim 1 or 2, wherein a nitrogen permeability coefficient is $1 \times 10^{-14}$ mol·m/(m²·s ·Pa) or less.

4. The ultra-high molecular weight polyethylene submicron thin film according to any one of claims 1 to 3, wherein a haze value in a visible light region is 50 % or less.

5. The ultra-high molecular weight polyethylene submicron thin film according to any one of claims 1 to 4, wherein a melting profile recorded with a differential scanning calorimeter includes one or more endothermic peaks at each of (1) from 130 °C to lower than 140 °C, (2) from 140 °C to lower than 150 °C, and (3) 150 °C or higher.

6. The ultra-high molecular weight polyethylene submicron thin film according to any one of claims 1 to 5, wherein an adhesion coefficient obtained by an adhesion test is 1,000 N/m or more.

7. A method of producing an ultra-high molecular weight polyethylene submicron thin film, the method comprising:

a first melt biaxial stretching step of melt biaxial stretching a raw film containing, as a main component, an ultra-high molecular weight polyethylene having a viscosity average molecular weight of from 1 million to 15 million, in an x-axis direction and a y-axis direction at a temperature equal to or higher than a melting point of the raw film;
a cooling step of cooling the stretched film stretched in the first melt biaxial stretching step to a temperature equal to or lower than a melting point of the stretched film; and
a second melt biaxial stretching step of melt biaxial stretching the stretched film cooled in the cooling step again in the x-axis direction and the y-axis direction at a temperature equal to or higher than the melting point of the stretched film,
wherein a film thickness of the ultra-high molecular weight polyethylene submicron thin film to be obtained is less than 1 $\mu$m.

8. The method of producing an ultra-high molecular weight polyethylene submicron thin film according to claim 7, further comprising, before the cooling step, a melt biaxial shrinking step of melt biaxial shrinking the stretched film obtained in the first melt biaxial stretching step in the x-axis direction and the y-axis direction at a temperature equal to or higher than the melting point of the stretched film.

9. The method of producing an ultra-high molecular weight polyethylene submicron thin film according to claim 7 or 8, further comprising a third step including at least one of:

a melt biaxial stretching cooling step of cooling, after the second melt biaxial stretching step, the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film; or
a melt shrinking stretching cooling step of melt biaxial shrinking, after the second melt biaxial stretching step, the stretched film in the x-axis direction and the y-axis direction at a temperature equal to or higher than the melting point of the stretched film, cooling the stretched film to a temperature equal to or lower than the melting point of the stretched film, melt biaxial stretching the stretched film again in the x-axis direction and the y-axis direction at a temperature equal to or higher than the melting point of the stretched film, and then cooling the stretched film to a temperature equal to or lower than the melting point of the stretched film,
wherein the third step is performed once or repeated a plurality of times.

10. The method of producing an ultra-high molecular weight polyethylene submicron thin film according to any one of claims 7 to 9, further comprising a raw film preparation step of molding an ultra-high molecular weight polyethylene raw material powder having a viscosity average molecular weight of from 1 million to 15 million into a film shape at a temperature equal to or higher than a melting point of the ultra-high molecular weight polyethylene raw material powder.

11. The method of producing an ultra-high molecular weight polyethylene submicron thin film according to claim 10, wherein the raw film preparation step is a step of molding the ultra-high molecular weight polyethylene raw material powder into a film shape by press molding.

12. The method of producing an ultra-high molecular weight polyethylene submicron thin film according to claim 11, wherein the press molding is performed under reduced pressure.

FIG.1

# FIG.2

EXAMPLE 1
(A)

EXAMPLE 2
(B)

FIG.3

FIG.4

FIG.5

CONTROL EXAMPLE 1              COMPARATIVE EXAMPLE 1              EXAMPLE 1

COMPARATIVE EXAMPLE 3         COMPARATIVE EXAMPLE 2              EXAMPLE 2

# FIG.6

## INTERNATIONAL SEARCH REPORT

International application No.

**PCT/JP2022/022217**

### A. CLASSIFICATION OF SUBJECT MATTER

*C08J 5/18*(2006.01)i; *B29C 55/12*(2006.01)i
FI: C08J5/18 CES; B29C55/12

According to International Patent Classification (IPC) or to both national classification and IPC

### B. FIELDS SEARCHED

Minimum documentation searched (classification system followed by classification symbols)

C08J5/18; B29C55/00-55/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2010/101214 A1 (NATIONAL UNIVERSITY CORPORATION GUNMA UNIVERSITY) 10 September 2010 (2010-09-10) <br> claims, paragraphs [0001], [0021]-[0023], examples | 1-12 |
| X | WO 2012/029881 A1 (NATIONAL UNIVERSITY CORPORATION GUNMA UNIVERSITY) 08 March 2012 (2012-03-08) <br> claims, paragraphs [0001], [0029], [0037], [0038], examples | 1-12 |
| A | JP 2019-193997 A (NATIONAL UNIVERSITY CORPORATION GUNMA UNIVERSITY) 07 November 2019 (2019-11-07) <br> entire text | 1-12 |
| A | JP 2012-514674 A (TEIJIN ARAMID B. V.) 28 June 2012 (2012-06-28) <br> entire text | 1-12 |
| A | JP 6-262679 A (MITSUI PETROCHEMICAL INDUSTRIES, LTD.) 20 September 1994 (1994-09-20) <br> entire text | 1–12` |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2022** | **30 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/022217** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/143424 A2 (TEMPLE UNIVERSTIY-OF THE COMMONWEALTH SYSTEM OF HIGHER EDUCATION) 25 July 2019 (2019-07-25)<br>entire text | 1–12` |

Form PCT/ISA/210 (second sheet) (January 2015)

INTERNATIONAL SEARCH REPORT

Information on patent family members

International application No.

**PCT/JP2022/022217**

| Patent document cited in search report | | | Publication date (day/month/year) | Patent family member(s) | | | Publication date (day/month/year) |
|---|---|---|---|---|---|---|---|
| WO | 2010/101214 | A1 | 10 September 2010 | US 2011/0319585 A1 claims, paragraphs [0001], [0033]-[0042], examples EP 2404737 A1 | | | |
| WO | 2012/029881 | A1 | 08 March 2012 | US 2013/0157035 A1 claims, paragraphs [0002], [0003], [0106], [0122]-[0132], examples EP 2612880 A1 | | | |
| JP | 2019-193997 | A | 07 November 2019 | (Family: none) | | | |
| JP | 2012-514674 | A | 28 June 2012 | US 2011/0268951 A1 WO 2010/079174 A2 EP 2385963 A1 KR 10-2011-0112398 A CN 102341438 A | | | |
| JP | 6-262679 | A | 20 September 1994 | (Family: none) | | | |
| WO | 2019/143424 | A2 | 25 July 2019 | US 2021/0179807 A1 | | | |

Form PCT/ISA/210 (patent family annex) (January 2015)

# EP 4 353 772 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010201649 A
- JP 2019193997 A
- WO 2018039436 A1
- WO 20140344484 A
- JP 2005314544 A
- JP 2005313391 A
- WO 2018088280 A
- JP 2021091702 A

### Non-patent literature cited in the description

- **K. TANAKA et al.** *ACS Macro Lett.,* 2018, vol. 7, 1198
- **S. TAKEOKA et al.** *Adv. Mater.,* 2013, vol. 25, 545
- **P. SMITH et al.** *J. Mater. Sci.,* 1980, vol. 15, 505
- **A. PANKAJ et al.** *Chem. Rev.,* 2004, vol. 104, 4419
- **H. UEHARA et al.** *Adv. Funct. Mater.,* 2012, vol. 22, 2048
- **THOMAS KELLER ; MATTHIAS GROSCH ; KLAUS D. JAND.** *Macromolecules,* 2007, vol. 40, 5812-5819